Europäisches Patentamt

European Patent Office

Office européen des brevets

(19)

(11) Veröffentlichungsnummer : **0 011 326**
**B2**

(12)

# NEUE EUROPÄISCHE PATENTSCHRIFT

(45) Veröffentlichungstag der neuen Patentschrift :
15.06.88

(21) Anmeldenummer : 79200617.3

(22) Anmeldetag : 25.10.79

(51) Int. Cl.⁴ : **C 01 B 11/02, C 25 B   1/46,**
**C 25 B   1/26, C 01 B   7/01,**
**C 01 B 11/06// D21C9/14**

(54) Verfahren zur Herstellung von Chlordioxid und gegebenenfalls Chlor aus Chlorwasserstoff und elektrolytisch gewonnenem Alkalichlorat.

(30) Priorität : 14.11.78 DE 2849250

(43) Veröffentlichungstag der Anmeldung :
28.05.80 Patentblatt 80/11

(45) Bekanntmachung des Hinweises auf die Patenterteilung : 19.05.82 Patentblatt 82/20

(45) Bekanntmachung des Hinweises auf die Entscheidung
über den Einspruch : 15.06.88 Patentblatt 88/24

(84) Benannte Vertragsstaaten :
AT BE DE FR GB IT NL SE

(56) Entgegenhaltungen :
CA-A-   571 458
CA-A-   956 784
US-A- 3 055 476
US-A- 3 407 128
US-A- 3 755 068
US-A- 3 897 320
Society of Chemical Industries, 1979, p. 75

(73) Patentinhaber : METALLGESELLSCHAFT AG
Reuterweg 14 Postfach 3724
D-6000 Frankfurt/M.1 (DE)

(72) Erfinder : Lohrberg, Karl, Dipl.-Ing.
Breslauer Strasse 1
D-6056 Heusenstamm (DE)
Erfinder : Bielz, Siegfried, Ing. grad
Wilhelm-Busch-Strasse 62
D-6000 Frankfurt/Main (DE)
Erfinder : Janisch, Paul, Dipl.-Chem.
Auf der Mauseller
D-6497 Steinau 2 (DE)

(74) Vertreter : Fischer, Ernst, Dr.
Reuterweg 14
D-6000 Frankfurt am Main 1 (DE)

## Beschreibung

Die Erfindung betrifft ein Verfahren zur Herstellung von Chlordioxid und gegebenenfalls Chlor aus Chlorwasserstoff und elektrolytisch gewonnenem Alkalichlorat, bei dem die Rückstandslösung aus der Chloratzersetzung zur erneuten Chloratbildung der Chloratelektrolyse zugeführt wird und mindestens ein Teil des dem erzeugten Chlordioxid äquivalenten Chlorwasserstoffs durch Verbrennen von bei einer Chloralkalielektrolyse erhaltenem Chlorgas mit Wasserstoff gewonnen wird.

Ein aus DE-C-831 542 bekanntes Verfahren zur Herstellung von Chlordioxid (sogen. Münchener Verfahren) sieht die Umsetzung des Chlorats mit einer höchstens stöchiometrischen Säuremenge sowie die Rückführung der Rückstandslösung, die Natriumchlorat und Natriumchlorid enthält, in die Chlorat-elektrolyse vor. Bei dem vorbekannten Verfahren wird ein kontinuierlicher Strom einer NaCl-haltigen Natriumchloratlösung mit Salzsäure bei erhöhter Temperatur in einer Mehrzahl, vorzugsweise sechs, hintereinandergeschalteter Reaktionsgefäße geleitet und mit Salzsäure zur Reaktion gebracht. Das entstandene Gasgemisch aus Chlordioxid und Chlor wird mittels eines Luftstroms verdünnt und abgesaugt, um unterhalb der Explosionsgrenze von 15 % Chlordioxid im Reaktorgas zu bleiben. Die Reaktionslösung, die nach Eindampfen neben Natriumchlorat einen hohen NaCl-Gehalt aufweist, wird in die Elektrolyse zwecks Chloratbildung eingegeben und die erhaltene Chloratlösung wieder dem Kreislauf zugeführt. Das Chlor des aus dem Chlordioxid-Reaktor austretenden Chlordioxid/Chlor/Luftgemisches kann nach Absorption des Chlordioxids mit dem Wasserstoff der Chloratelektrolyse zu Salzsäure verbrannt werden. Jedoch reicht die derart gewonnene Salzsäuremenge selbstverständlich nicht aus, um das gesamte Chlordioxid zu erzeugen. Eine weitere Schwierigkeit bei diesem Verfahrensweg ist die Tatsache, daß die Verdünnung mit Luft sehr genau kontrolliert werden muß, um Chlor und Luft-Sauerstoff verbrennen zu können. Reduzieren der Luftmenge auf der anderen Seite bedeutet, daß man sehr scharf an der Explosionsgrenze des Chlordioxids fahren muß. Schließlich ist es ein Nachteil dieses Verfahrens, daß Salzsäure in nichtindustrialisierten Ländern nicht oder nur schwer zur Verfügung steht und mit hohen Transportkosten belastet ist, da Salzsäure üblicherweise nur in Form 32 %iger wässriger Lösung gehandelt wird.

Es ist ferner bekannt, Chlor, Natronlauge und Wasserstoff durch Elektrolyse von Natriumchloridlösungen nach dem Membranverfahren herzustellen. Hierin sind Anoden- und Kathodenraum der Elektrolysezelle durch eine Ionenaustauscher-Membran getrennt, durch die im wesentlichen nur die Alkaliionen hindurchtreten können. Diese werden an der Kathode elektrisch neutralisiert und bilden im Kathodenraum mit Wasser Alkalilauge und Wasserstoff. Halogenionen können die Membran nicht passieren und werden daher ausschließlich im Anodenraum in Form von Halogengas freigesetzt. Ein Teil der im Kathodenraum gebildeten OH-Ionen wandert jedoch durch die Membran in den Anodenraum und bildet dort mit Chlorgas — je nach dem pH-Wert des Anolyt — unerwünschte Chlorsauerstoffsäuren bzw. deren Salze, die nur durch Säurezugabe zerstört werden können. Diesen Nachteil hat man durch eine Arbeitsweise mit saurem Anolyt beseitigt (D. Bergner « Elektrolytische Chlorerzeugung nach dem Membran-Verfahren », Chemiker-Zeitung 101 (1977), Seiten 433 bis 447). Bei dem Verfahren gemäß US-A-3 897 320 wird chlorathaltiger Anolyt aus der Membranelektrolyse einer Chloratelektrolyse zugeführt und schließlich auskristallisiertes Chlorat gewonnen.

Zur Gewinnung von Bleichchemikalien für Kraftpapierstoffe ist aus US-A-3 442 778 ein Verfahren zur Herstellung von Chlordioxid, Chlor, Wasserstoff, Alkalihydroxid und Alkalisulfid bekannt. Das vorbekannte Verfahren kombiniert ein Verfahren der Chloralkalielektrolyse mit Quecksilberkathode mit einem Kreislaufverfahren aus Chloratelektrolyse und Chloratzersetzung. Das bei der Chloralkalielektrolyse und bei der Chloratzersetzung anfallende Chlor wird mit Wasserstoff aus der Chloratelektrolyse verbrannt, während das Natriumamalgam zwingend für die Reaktion mit Polysulfiden zur Gewinnung von Natriumsulfid benötigt wird.

Es ist Aufgabe der Erfindung, ein Verfahren zur Erzeugung von Chlordioxid, Alkalilauge und gegebenenfalls Chlor bereitzustellen, das nicht von Alkalichlorat und Chlorwasserstoff als Basisrohstoffen ausgeht und bei welchem die in der Chloratzersetzung zumindest erforderliche Menge Chlorwasserstoff durch direkte Erzeugung und Verbrennung von Wasserstoff mit Chlor gewonnen werden kann. Ferner soll das Verfahren mit Vorteil in Zellstoffabriken mit ungenügender bzw. ungünstiger Rohstoffbasislage praktiziert werden können.

Die Aufgabe wird beim eingangs genannten Verfahren dadurch gelöst, daß der Kreislauf Chloratzersetzung/Chloratelektrolyse mit einer nach dem Membranverfahren arbeitenden Chloralkalielektrolyse kombiniert wird, wobei das in der Membranelektrolyse als Nebenprodukt gebildete Alkalichlorat unter Bildung von Chlordioxid zersetzt oder als solches in den Kreislauf Chloratzersetzung/Chloratelektrolyse eingetragen wird.

Des erfindungsgemäße Verfahren läßt sich in den folgenden Bruttogleichungen der einzelnen Verfahrensschritte darstellen :

(Siehe Tabelle Seite 3 f.)

2

0 011 326

| Chloralkalielektrolyse | : $NaCl + H_2O$ | $\rightarrow$ $1/2\ H_2 + 1/2\ Cl_2 + NaOH$ |
| Chloratelektrolyse | : $NaCl + 3H_2O$ | $\rightarrow$ $NaClO_3 + 3H_2$ |
| Chlorverbrennung | : $Cl_2 + H_2$ | $\rightarrow$ $2\ HCl$ |
| Chlordioxidherstellung | : $NaClO_3 + 2\ HCl$ | $\rightarrow$ $ClO_2 + 1/2\ Cl_2 + NaCl + H_2O$ |

$$NaCl + 3\ H_2O \quad \rightarrow \quad ClO_2 + 2\ 1/2\ H_2 + NaOH$$

Hieraus ergibt sich, daß nur Strom- und Steinsalzkosten die Wirtschaftlichkeit des Verfahrens bestimmen. Natürlich kann man nach Reaktion 1 auch in Bezug auf die Summengleichung überstöchiometrische Mengen von Chlor herstellen, um die für die Bleicherei zusätzlich erforderlichen Mengen an $Cl_2$ und NaOH zu erzeugen.

Das erfindungsgemäße Verfahren arbeitet in der folgenden Weise, wobei auf das Fließschema Bezug genommen wird.

Zum Anfahren der Alkalichloratelektrolyse 1 wird zunächst Kochsalzlösung benötigt. Diese wird über Leitung 24 aus dem Salzlöser 27 der Solereinigungsvorrichtung 20 der Chloralkali-Membranelektrolyse 2 und über Leitung 18 der Chloratelektrolyse 1 zugeführt. Das in der Alkalichloratelektrolyse 1 gewonnene Natriumchlorat wird über die Leitung 3 dem Chlordioxid-Reaktor 4 zugeführt. Zu Zersetzung des Natriumchlorats im Reaktor 4 wird über die Leitung 6 Salzsäure eingespeist. Hierbei kann die gesamte, für die Chlordioxiderzeugung notwendige Salzsäuremenge aus der Chloralkali-Membranelektrolyse 2 gedeckt und durch Verbrennung von Chlor und Wasserstoff im Reaktor 5 gewonnen werden. Der Wasserstoff hierzu steht aus der Chloratelektrolyse 1 und Membranelektrolyse 2 über die Leitungen 7,8 zur Verfügung.

Der in der Chlorwasserstoffsynthese 5 gewonnene und überschüssigen Wasserstoff enthaltende Chlorwasserstoffstrom 9 passiert die Absorptionsvorrichtung 10, aus der Wasserstoff und Stickstoff ausgelassen werden und tritt über Leitung 6 in den Chlordioxid-Reaktor 4 ein. Die Reaktionsrückstandslösung wird in bekannter Weise durch Verbindung 11 der Chloratelektrolyse 1 wieder zugeführt. Luft als Verdünnungsgas wird über Verbindung 12 in den Chlordioxid-Reaktor 4 eingesaugt. Das Reaktionsgasgemisch $ClO_2/Cl_2$ tritt über Leitung 13 aus dem Chlordioxid-Reaktor 4 aus. In der Absorptionsvorrichtung 14 wird Chlordioxid als wäßrige Lösung durch Leitung 15 ausgetragen. Das verbleibende Chlorgas/Luft-Gemisch wird über 16 abgezogen und dem Chlorstrom 17 aus der Chloralkali-Membranelektrolyse 2 zugeführt. Das Chlorgas/Luft-Gemisch kann aber auch in Alkalilauge eingeführt und Alkalihypochlorit gebildet werden.

In der Membranelektrolyse fällt in an sich bekannter Weise Alkalilauge an, die über Strom 25 entnommen wird. In den Kathodenraum wird über Rohr 26 Wasser eingeführt.

Von dem aus der Membranelektrolyse 2 austretenden, zwangsläufig chlorathaltigen Anolyten 18 wird mindestens ein Teilstrom 19 im Salzlöser 27 mit Alkalichlorid aufgestärkt. Nach Fällung der Verunreinigungen in der Reinigungsvorrichtung 20 wird bei erhöhter Temperatur von beispielsweise 70 bis 90 °C ein weiterer Teilstrom 28 auf einen pH-Wert unter 1 im Reaktor 21 eingestellt. Das in dieser Zersetzung in Abhängigkeit vom pH-Wert gebildete Chlorgas/Chlordioxid-Gemisch wird wieder der Verbrennungsstufe zur Bildung von Chlorwasserstoff zugeführt 23/16 oder den Reaktionsgasen aus dem $ClO_2$-Reaktor 4 zwecks Absorption des $ClO_2$ im Absorber 14 zugefügt. Die Alkalichloridlösung wird vor erneutem Eintrag in den Anodenraum auf einen pH-Wert im Bereich von 1 bis 6, vorzugsweise 1 bis 2,5, angehoben. Im Hinblick auf eine möglichst quantitative Zerstörung der Chlorsauerstoffsäuren bzw. deren Salze ist es vorteilhaft, den zweiten Teilstrom 28 auf einen pH-Wert unter 0,8 einzustellen und ihn in Abhängigkeit von dem angestrebten End-pH-Wert der Alkalichloridlösung entsprechend klein zu wählen, d. h. der zweite Teilstrom 28 beträgt maximal 20 % und vorzugsweise 8 bis 15 % des austretenden Anolyten.

Nach einer besonders vorteilhaften Ausbildung des erfindungsgemäßen Verfahrens versetzt man einen Teilstrom des aus der Membranelektrolyse austretenden chlorathaltigen Anolyts 19 im Reaktor 21 (Zersetzer) mit aus der Chlorwasserstoffsynthese 5/10 über Leitung 22 entnommener Salzsäure. Das hierbei gebildete Chlordioxid/Chlorgas-Gemisch wird über Verbindung 23 mit dem aus dem Chloratzersetzer 4 erhaltenen $ClO_2/Cl_2$-Gasgemisch vereint.

Die insgesamt im Kreislauf Chloratzersetzung/Chloratelektrolyse unvermeidlich auftretenden Verluste an Natriumchlorid werden aus dem Anolyt der Alkalichlorid-Membranelektrolyse gedeckt. Der Anolyt wird über Leitung 18, 18a dem Kreislauf Chloratelektrolyse/Chloratzersetzung bei 3 zugeführt.

Es liegt somit eine Kombination eines Verfahrens der Alkalichloratzersetzung und der Chloralkalielektrolyse vor und zusammenfassend wirken Elemente beider Verfahren funktionell in der Weise zusammen, daß

a) der aus mindestens einem Teil des Chlors der Membran-Chloralkalielektrolyse gewonnene Chlorwasserstoff in den Chlordioxid-Reaktor eingeführt wird,

b) das von der $ClO_2$-Absorption verbleidende Chlor/Luft-Gemisch mit dem Wasserstoff aus der Membran- und der Chloratelektrolyse zur Verbrennung gebracht wird,

c) das Chlor/Chlordioxid-Gemisch, gewonnen durch Zersetzung des bei der Membranelektrolyse anfallenden Alkalichlorats, mit dem Chlordioxidstrom aus dem Chlordioxid-Reaktor vereint wird.

Die Apparative Ausgestaltung des im erfindungsgemäßen Verfahren integrierten Prozesses der Chloratzersetzung, wie Chlordioxid-Reaktoren oder Elektrolysevorrichtungen, entspricht im wesentlichen den aus dem Münchener Verfahren bekannten Vorrichtungen (DE-C-831 542 ; Ullmann, 3. Auflage, Band 5, Seite 553).

Die Membranzelle selbst weist die an sich bekannten konstruktiven Elemente auf. Als Membranmaterial sind Polyfluorkohlenwasserstoffe mit Kation-austauschenden Gruppen, wie z. B. Sulfonsäure- $(SO_3H)$, Carbonsäure- $(COOH)$ und Phosphonsäure- $(PO_3H_2)$ Gruppen, geeignet. Die einzusetzenden Anoden können aus Graphit bestehen. Insbesondere vorteilhaft sind jedoch mit Edelmetall oder Edelmetalloxid beschichtete Titan-, Niob- oder Tantal-Elektroden oder sogenannte dimensionsstabile Anoden, bei denen die elektrokatalytische Wirkung von Mischoxiden von Edelmetallen und filmbildenden Metallen, insbesondere Titan, ausgeht.

Als Kathodenmaterial ist Stahl und Nickel, Nickel in Form der sogenannten porösen Doppelskelett-Kathoden, besonders geeignet.

Das erfindungsgemäße Verfahren weist Vorteile auf.

Im erfindungsgemäßen Verfahren wird die für die Chlordioxiderzeugung durch Natriumchloratzersetzung mittels Säure erforderliche Salzsäuremenge ganz oder zum überwiegenden Teil direkt erzeugt. Darüber hinaus arbeitet das Verfahren mit einem Wasserstoffüberschuß, was zu vorteilhaften gefahrlosen Arbeitsweisen führt, da Verdünnungsluft im großen Überschuß verbrannt und damit der Chlordioxid-Reaktor weit unterhalb der Explosionsgrenze des Chlordioxids gefahren werden kann. Ferner kann die Salzsäure-Synthese mit Wasserstoffüberschuß betrieben werden, so daß keinerlei Nachbehandlung der Gase erforderlich ist und auch der unerwünschte Anfall von Natriumhypochlorit vermieden wird. Die bei der Membran-Alkalichloridelektrolyse auftretende und dort an sich unerwünschte Chloratbildung wird im erfindungsgemäßen Verfahren durch Säurezersetzung vorteilhaft für die Chlordioxidgewinnung herangezogen. Eventuell auftretende Chlorüberschüsse können im erfindungsgemäßen Verfahren glatt für die Chlorwasserstoffsynthese aufgenommen werden. Jede Chloralkali-Elektrolyse muß aus Sicherheitsgründen mit einem Notabsorptionssystem ausgerüstet sein, welches in der Lage ist, im Notfall die gesamte Chlorproduktion für eine gewisse Zeit unter Bildung von Hypochlorit aufzunehmen. Bei dem erfindungsgemäßen Verfahren kann man dieses Hypochlorit in die Chloratelektrolyse geben, dort bei erhöhten Temperaturen der Chloratelektrolyse zu Natriumchlorat disproportionieren und so letztlich in erwünschtes Chlordioxid umsetzen.

Die Erfindung wird anhand des Ausführungsbeispiels näher und beispielsweise erläutert :

## Ausführungsbeispiel

In einer Zellstoffanlage werden 500 tato gebleichten Zellstoffs erzeugt. Für die Bleichung werden 13 tato Chlor sowie 8 tato Chlordioxid benötigt, die nach dem erfindungsgemäßen Verfahren erzeugt werden. Der Chlordioxid-Reaktor 4 und die Membran-Elektrolysezelle 2 arbeiten mit einem Wirkungsgrad von 88 %. Bei einem Wirkungsgrad des Chlordioxid-Reaktors 4 von 88 % werden pro Tonne Chlordioxid 1,54 t Salzsäure zur Zersetzung des Natriumchlorats benötigt. Von diesen 1,54 t Salzsäure können 0,99 t Salzsäure aus den Restgasen 16 erzeugt werden, während 0,55 t Salzsäure in Form von Chlor 17 erzeugt werden müssen. In der Chlorat-Elektrolyse 1 fallen 0,1 t Wasserstoff an. Dieser Menge steht ein Bedarf von 0,116 t Wasserstoff gegenüber. Die Differenzmenge Wasserstoff wird daher aus der Membran-Elektrolysezelle 2 über 8 entnommen. Aus der Membran-Elektrolysezelle 2 werden somit 0,55 t Salzsäure entsprechend 0,54 t Chlor pro Tonne Chlordioxid benötigt. Die Membran-Elektrolyse 2 läuft daher mit einer Netto-Chlorproduktion von 17,3 tato Chlor, wovon 13 tato für die Chlorbleiche eingesetzt werden, während 4,3 tato Chlor der Verbrennung zu Chlorwasserstoff zugeführt werden, der als Rohmaterial für die Zersetzung des Natriumchlorats im Reaktor 4 dient.

Die vorerwähnte Membran-Elektrolysezelle des erfindungsgemäßen Verfahrens hat einen Wirkungsgrad von 88 %, das heißt durch Nebenreaktionen treten Stromverluste von 12 % auf. Von diesen 12 % werden 7,5 % in Nebenreaktionen unter Bildung von Natriumchlorat verbraucht. Dies entspricht einer Natriumchlorat-Produktion von 650 kg/Tag. Diese Menge Natriumchlorat wird mittels 1 t Salzsäure zu Chlordioxid und Chlor zersetzt, wobei 0,36 tato Chlordioxid anfallen. Bei dieser Arbeitsweise kann die Chlordioxidanlage um 0,36 tato $ClO_2$ kleiner ausgelegt werden. Entsprechend muß jedoch die Membran-Elektrolyse 2 auf eine Netto-Chlorproduktion von 18,3 tato Chlor eingestellt werden.

Wenn man das in der Chloralkali-Elektrolyse 2 in einer Menge von 650 kg/Tag gebildete Chlorat 100 %ig zu Chlor in stark saurem Milieu umsetzen will, werden für die Reaktion selbst 1,34 tato Salzsäure benötigt. Für die Einstellung des erforderlichen pH-Wertes werden weitere 480 kg Salzsäure benötigt. Bei dieser Verfahrensweise bleibt die ursprüngliche Kapazität der Chlordioxid-Anlage bestehen, die Netto-Chlorproduktion der Membran-Chloralkalielektrolysezelle 2 muß jedoch um 0,47 tato auf ca. 17,8 tato vergrößert werden. Die Brutto-Chlorproduktion erhöht sich dann auf etwa 19 tato Chlor.

Bei der Ausführungsform des erfindungsgemäßen Verfahrens ohne Verwendung des zusätzlichen Chlorat-Zersetzers 21 wird ein Teilstrom des Anolyts 18 mit 0,65 tato Natriumchloratinhalt dem Kreislauf der Natriumchloratelektrolyse 1 zugeführt. In diesem Fall bleibt die Chlordioxid-Anlage in der ursprünglichen Größe bestehen. Die Natriumchlorat-Elektrolyse 1 muß jedoch nicht mehr 14,4 tato Chlorat erzeugen, sondern nur noch 13,8 tato Chlorat. Hingegen wird die Leistung der Membran-Chloralkalielektrolyse auf eine Netto-Produktion von 18,6 tato Chlor angehoben. In diesem Falle wird die Kochsalzmen-

0 011 326

ge, die mit dem Natriumchlorat aus der Membran-Elektrolysezelle 2 in den Kreislauf der Chlorat-Elektrolyse 1 eingespeist wurde, nach Zersetzung des Chlorats im Reaktor 4 wieder dem Sole-Kreislauf der Membran-Elektrolyse über Verbindung 29 zugeführt.

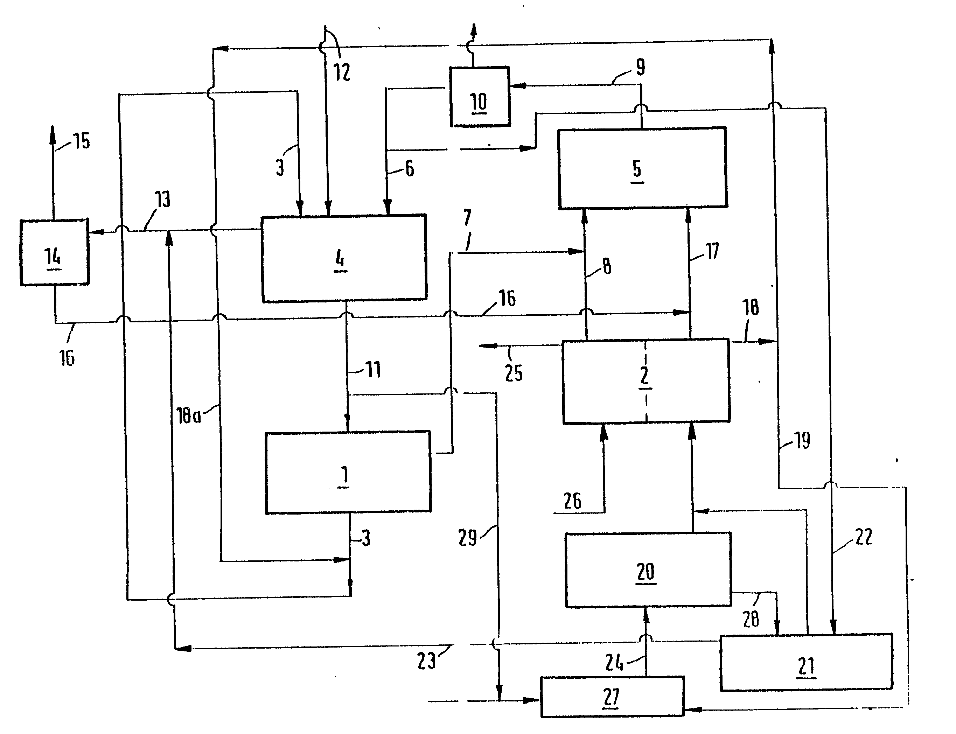

**Patentansprüche**

1. Verfahren zur Herstellung von Chlordioxid und ggf. Chlor aus Chlorwasserstoff und elektrolytisch gewonnenem Alkalichlorat, bei dem die Rückstandslösung aus der Chloratzersetzung zur erneuten Chloratbildung der Chloratelektrolyse zugeführt wird und mindestens ein Teil des dem erzeugten Chlordioxid äquivalenten Chlorwasserstoffs durch Verbrennen von bei einer Chloralkalielektrolyse erhaltenem Chlorgas mit Wasserstoff gewonnen wird, dadurch gekennzeichnet, daß der Kreislauf Chloratzersetzung/Chloratelektrolyse mit einer nach dem Membranverfahren arbeitenden Chloralkalielektrolyse kombiniert wird, wobei das in der Membranelektrolyse als Nebenprodukt gebildete Alkalichlorat unter Bildung von Chlordioxid zersetzt oder als solches in den Kreislauf Chloratzersetzung/Chloratelektrolyse eingetragen wird.

2. Verfahren nach Anspruch 1, dadurch gekennzeichnet, daß man das bei der Chloratzersetzung erhaltene Gasgemisch wäscht und das hierbei erhaltene Chlorgas mit mindestens teilweise aus der Membranelektrolyse stammendem Wasserstoff der Verbrennungsstufe zur Bildung von Chlorwasserstoff zuführt.

3. Verfahren nach den Ansprüchen 1 bis 2, dadurch gekennzeichnet, daß man einen Teilstrom des aus der Membranelektrolyse austretenden Anolyts mit Salzsäure unter Bildung von Chlordioxid und Chlorgas versetzt und das erhaltene Gasgemisch mit dem erhaltenen Gasgemisch des Chloratzersetzers vereint.

4. Verfahren nach den Ansprüchen 1 bis 3, dadurch gekennzeichnet, daß man die Alkalichloridverluste im Kreislauf Chloratzersetzung/Chloratelektrolyse aus dem Anolyt der Membranelektrolyse deckt.

**Claims**

1. A process of producing chlorine dioxide and optionally chlorine from hydrogen chloride and electrolytically produced alkali chlorate, wherein the residual solution from the chlorate decomposer is fed to the chlorate electrolysis for a repeated formation of chlorate and at least part of the hydrogen chloride which is equivalent to the chlorine dioxide that has been produced is produced in that chlorine gas produced by a chlorine alkali electrolysis is burnt with hydrogen, characterized in that the cycle comprising the chlorate decomposition and the chlorate electrolysis is combined with a chlorine alkali electrolysis effected by the membrane process and the alkali chloride formed as a by-product in the membrane electrolysis is decomposed with formation of chlorine dioxide or is fed as such into the cycle comprising the chlorate decomposition and the chlorate electrolysis.

2. A process according to claim 1, characterized in that the gas mixture formed by the decomposition of chlorate is scrubbed and the resulting chlorine gas together with hydrogen that has been produced at least in part by the membrane electrolysis is supplied to the combustion stage for producing hydrogen chloride.

3. A process according to claims 1 to 2, characterized in that hydrochloric acid is added to a partial stream of the anolyte coming from the membrane electrolysis to form chlorine dioxide and chlorine gas and the resulting gas mixture is combined with the gas mixture formed in the chlorate decomposer.

4. A process according to claims 1 to 3, characterized in that the alkali chloride losses in the cycle comprising the chlorate decomposition and the chlorate electrolysis are made up for by anolyte from the membrane electrolysis.

**Revendications**

1. Procédé de préparation de dioxyde de chlore et le cas échéant de chlore, à partir de chlorure d'hydrogène et de chlorate de métal alcalin obtenu par électrolyse, qui consiste à envoyer la solution résiduelle de la décomposition du chlorate à l'électrolyse du chlorate pour reformer du chlorate, et à obtenir une partie du chlorure d'hydrogène équivalent au dioxyde de chlore produit par combustion avec de l'hydrogène du chlore gazeux obtenu lors d'une électrolyse d'un chlorure de métal alcalin, caractérisé en ce qu'il consiste à combiner le circuit décomposition du chlorate/électrolyse du chlorate avec une électrolyse de chlorure de métal alcalin fonctionnant par le procédé à membrane, le chlorure de métal alcalin formé comme sous-produit dans l'électrolyse par membrane étant décomposé avec formation de dioxyde de chlore ou étant introduit tel quel dans le circuit décomposition du chlorate/électrolyse du chlorate.

2. Procédé suivant la revendication 1, caractérisé en ce qu'il consiste à laver le mélange gazeux obtenu lors de la décomposition du chlorate et à envoyer le chlore gazeux ainsi obtenu avec de

5

l'hydrogène provenant au moins partiellement de l'électrolyse par membrane, au stade de combustion pour la formation de chlorure d'hydrogène.

3. Procédé suivant la revendication 1 ou 2, caractérisé en ce qu'il consiste à mélanger un courant partiel de l'anolyte sortant de l'électrolyse par membrane à de l'acide chlorhydrique avec formation de dioxyde de chlore et de chlore gazeux, et à réunir le mélange gazeux obtenu au mélange gazeux obtenu provenant de la décomposition du chlorate.

4. Procédé suivant l'une des revendications 1 à 3, caractérisé en ce qu'il consiste à couvrir les pertes en chlorure de métal alcalin dans le circuit décomposition du chlorate/électrolyse du chlorate par l'anolyte de l'électrolyse par membrane.